# EUROPÄISCHE PATENTSCHRIFT

(11) **EP 2 480 412 B1**
(45) Veröffentlichungstag und Bekanntmachung des Hinweises auf die Patenterteilung: **05.07.2017**
(21) Anmeldenummer: 10763327.3
(22) Anmeldetag: 20.09.2010
(51) Int. Cl.: B32B 27/08, B32B 27/18, B32B 7/02, B29C 45/16, B29C 45/14, B32B 27/36

(54) **SPRITZGEGOSSENE MEHRKOMPONENTEN-VERBUNDSYSTEME MIT VERBESSERTEM BRANDVERHALTEN**
INJECTION MOULDED MULTI-COMPONENT COMPOSITE MATERIALS HAVING AN IMPROVED FIRE BEHAVIOUR
MATÉRIAUX COMPOSITES À PLUSIEURS CONSTITUANTS MOULÉS PAR INJECTION AYANT UN COMPORTEMENT AU FEU AMÉLIORÉ

(30) Priorität: 24.09.2009 DE 102009042938
(43) Veröffentlichungstag der Anmeldung: 01.08.2012
(73) Patentinhaber: Covestro Deutschland AG, 51373 Leverkusen (DE)
(72) Erfinder: HAHN, Rüdiger, 51399 Burscheid (DE); SCHWECKE, Constantin, 53347 Alfter (DE); MÜLLER, Andreas, 51061 Köln (DE); FRANSSEN, Hans, 47809 Krefeld (DE)
(74) Vertreter: Levpat
(86) Internationale Anmeldenummer: PCT/EP2010/063816
(87) Internationale Veröffentlichungsnummer: WO 2011/036122

(56) Entgegenhaltungen:
- DE-T2- 69 930 082
- DATABASE WPI Week 200376 Thomson Scientific, London, GB; AN 2003-807431 XP002612103, -& JP 2003 136663 A (NEC CORP) 14. Mai 2003 (2003-05-14)
- DATABASE WPI Week 200116 Thomson Scientific, London, GB; AN 2001-150043 -& JP 2001 030 431 A (KITAGAWA KOGYO KK) 6 February 2001 (2001-02-06)

## Beschreibung

Durch die vorliegende Erfindung werden ganz oder teilweise spritzgegossene Mehrkomponenten-Verbundsysteme mit verbessertem Brandverhalten und ein Verfahren zu deren Herstellung zur Verfügung gestellt.

Bei der Entwicklung von ganz oder teilweise spritzgegossenen Mehrkomponenten-Verbundsystemen mit sehr geringen Wanddicken werden teilweise sehr hohe Anforderungen an die Einzelkomponenten im Hinblick auf Fließeigenschaften und Brandverhalten gestellt. Beide Eigenschaften spielen eine immer größer werdende Rolle, der Flammschutz beispielsweise aufgrund der in den für Unternehmen einzuhaltenden Sicherheitsnormen. Je nach Anwendung müssen dabei unter Umständen unterschiedliche Sicherheitsnormen eingehalten werden. Gleichzeitig wird jedoch immer mehr Wert auf ein ansprechendes Design und die Erteilung der Kriterien für bestimmte Ecolabels gelegt. Die Auswahl der Zusatzstoffe, und insbesondere der Flammschutzmittel, wird durch solche Kriterien oder auch aufgrund von gesetzlichen oder normativen Vorgaben eingeschränkt. Für Einzelkomponenten stellt die sogenannte UL-Listung nach den Brandnormen des "Underwriters Laboratories" - Prüflabors eine allgemein anerkannte Klassifizierung dar.

Es hat daher bisher nicht am Bemühen gefehlt, die Flammwidrigkeit von Thermoplasten zu verbessern. Beispielsweise beschäftigt sich die WO-A 00/26287 mit der Verbesserung des Brandverhaltens durch die Reduktion der Viskosität des Polycarbonats in Phosphor-stabilisierten, extrudierten Polycarbonatplatten enthaltend Entformungsmittel.

In der EP-A 1 339 546 werden thermoplastisch formbare Polycarbonat-Verbundwerkstoffe sowie ihre Verwendung in flammgeschützten Polycarbonat-Formteilen offenbart. Es werden thermoplastisch verformbare Polycarbonat-Verbundwerkstoffe bestehend aus mindestens einer Schicht mit einem LOI - Wert kleiner als 29 und mindestens einer Schicht mit einem LOI - Wert größer als 29 beansprucht. In den weiteren Ansprüchen und in den Beispielen richtet sich die Anmeldung auf extrudierte Verbundwerkstoffe, wobei es sich bei der Schicht mit dem LOI-Wert kleiner 29 um eine Folienschicht mit einer Dicke zwischen 30 µm und 500 µm handeln soll. Die Werkstoffe sollen für Anforderungen, die im Flugzeugbau gestellt werden, geeignet sein. In welchen Grenzen solche Verbundwerkstoffe aus Materialien mit unterschiedlichen Brandverhalten eine UL-Klassifizierung erfüllen können, wird nicht gesagt. Insbesondere wird nicht beschrieben, dass Verbundwerkstoffe trotz hoher Anteile an niedrig oder nicht FR-geschütztem Material eine gute UL-Listung erzielen können.

Mit extrudierten mehrschichtigen Materialien beschäftigt sich auch die US-A 4824723, bei denen ein Kern aus einem flammgeschütztem Thermoplasten mit einer nicht flammgeschützten, elektrisch isolierenden Schicht umhüllt ist. Für den Kern werden Dicken von allgemein 4 - 240 mm angegeben, für die Außenschichten von 1 - 10 mm. Die Anmeldung beschäftigt sich nicht mit nach Mehrkomponentenspritzgießverfahren hergestellten Materialien, auch werden über die UL-Klassifizierung der Außenschichten und die für ausgewählte Materialien einzustellende Dickenverhältnisse keine Aussagen gemacht. Die JP-A 2003-136663 beschreibt spritzgegossene Zweikomponenten-Verbundsysteme, umfassend eine Schicht aus einem nicht flammhemmend ausgerüsteten thermoplastischen Polymer, zum Beispiel einem Acrylnitril-Polystyrol-Copolymer, zwischen zwei Schichten aus einem flammhemmend ausgerüsteten Polycarbonat, d.h. Sandwich-Verbundsysteme. Die flammhemmenden Eigenschaften der Verbundsysteme sind abhängig von den flammhemmenden Eigenschaften der für die Schichten eingesetzten Komponenten, von der relativen Dicke der Schichten und von der Gesamtdicke der Verbundsysteme.

Die JP-A 2001-030431 beschreibt das Hinterspritzen thermoplastischer Folien mit einer flammhemmend ausgerüsteten Zusammensetzung auf der Basis eines thermoplastischen Elastomers.

In der US-A 2008/0014446 wird ein durch Coextrusion hergestellter, flammgeschützter Mehrschichtaufbau beschrieben, bei dem jedoch die einzelnen Schichten bereits ausreichenden Flammschutz tragen sollen, um den geforderten Flammschutztest zu bestehen. Die vorliegende Erfindung zeigt, dass dies für spritzgegossene Mehrkomponenten-Verbundsysteme nicht notwendig ist.

In der WO-A 99/28128 wird ein coextrudierter Mehrschichtaufbau aus flammgeschützten und nicht flammgeschützten Folien beschrieben. Der Mehrschichtaufbau umfasst bei einer Dicke von max. 750 µm mindestens fünf Schichten. Eigenschaften solcher Systeme, insbesondere das Brandverhalten, lassen sich jedoch nicht auf spritzgegossene Mehrkomponenten-Verbundsysteme übertragen.

In der WO-A 2007/024456 ist schließlich ein Laminat aus einer Polycarbonatzusammensetzung und ein Verfahren zu seiner Herstellung sowie ein Produkt aus dem genannten Laminat bekannt, bei dem das Laminat eine erste und eine zweite Schicht umfasst, wobei die erste Schicht ein Polycarbonat, ein Polycarbonat-Polysiloxan-Copolymer, einen Elastifikator und ein Polyetherimid umfasst, wobei das Polycarbonat ca. 50 Gew.-% der kombinierten Gewichte des Polycarbonats, des Polycarbonat-Polysiloxan-Copolymers, des Elastifikators und des Polyetherimids umfasst. Hierdurch werden verbesserter Flammschutz, Schlagfestigkeit sowie eine verringerte Rauchbildung bei einem Brand des Materials erreicht. Insbesondere der Flammschutz erweist sich hierbei jedoch noch als verbesserungsbedürftig.

Spritzgegossene Mehrkomponenten-Verbundsysteme können aus identischen Materialtypen, gleichen Materialtypen mit verschiedenen Additiven und aus unterschiedlichen Materialien bestehen. Das Brandverhalten von spritzgegossenen Mehrkomponenten-Verbundsystemen ist bisweilen nicht bekannt. So könnte es z.B. zu einer Ablösung der beiden Schichten kommen, die dann separat verbrennen. Auch eine Beeinflussung der einen durch die andere Komponente ist möglich.

Wenn also ein Mehrkomponenten-Verbundsystem eine Brandklasse (z.B. UL94-V) benötigt, bezieht sich diese auf die gelistete Brandklasse der jeweiligen Einzelkomponente. Diese Einzelkomponenten müssen dann beide einzeln die geforderte Einstufung in der Wanddicke erreichen. Gerade, wenn hohe Anforderungen im Bereich Design, insbesondere an die Transparenz, oder der Einsatz eines Minimums an oder der Verzicht auf bestimmte Brandschutz-Mittel verlangt werden, ist für viele thermoplastische Materialien in dünnen Wanddicken die Einstufung schwierig zu erreichen. Es ist also eine Aufgabe der Erfindung, spritzgegossene Mehrkomponenten-Verbundsysteme zur Verfügung zu stellen, die im Verbund eine bestimmte Brandklassifizierung erfüllen können, obwohl mindestens eine Einzelkomponente diese Brandklassifizierung nicht erfüllt. Es ist weiterhin eine Aufgabe der Erfindung, eine Methode zur Verfügung zu stellen, die die Auswahl von - im Hinblick auf den gewünschten Brandschutz - geeigneten Materialien ermöglicht, die für ein solches Mehrkomponenten-Verbundsystem benötigt werden.

Es wurde nun gefunden, dass bei geeigneten Materialkombinationen ein spritzgegossenes Mehrkomponenten-Verbundsystem in Bezug auf das Brandverhalten in der Gesamtwanddicke gesehen werden kann. Durch diese Erfindung wird die Materialauswahl von UL- gelisteten Kunststoffen (in Bezug auf das Brandverhalten) deutlich erleichtert, da das Gesamtteil als aus einem Material bestehend angesehen werden kann. Dies ist überraschend, da die aktuelle Praxis der UL-Listung eine solche Sichtweise auf das System bisher nicht vorgibt. Wie oben beschrieben, wurden bisher nur extrudierte Systeme mit unterschiedlich flammgeschützten Schichten beschrieben, wobei sich Anforderungen an die Einzelschichten und an das Gesamtsystem sowie die vorgestellten Lösungen nicht mit der hier vorgestellten Erfindung vergleichen lassen. Diese zeigt nämlich auf, dass sich, überraschenderweise, bei ganz oder teilweise spritzgegegossenen Mehrkomponenten-Verbundsystemen abhängig von der UL-Listung der Einzelkomponenten, weitgehende Kombinationsmöglichkeiten von Materialien ergeben.

Bei dem erfindungsgemäßen, ganz oder teilweise spritzgegossenen Mehrkomponenten-Verbundsystem kann es sich entweder um eine hinterspritzte Folie oder um einen 2-Komponenten Spritzgieß-Verbund handeln.

Die in der folgenden Anmeldungen verwendeten Kürzel "HB", "V0", "V1" und "V2" beziehen sich auf die entsprechende Brandschutzklassifizierung nach der UL-Brandschutzprüfung, die weiter unten erklärt wird.

Das erfindungsgemäße Mehrkomponenten-Verbundsystem besitzt die Dicke a+b und enthält eine Komponente A in einer Dicke a und eine Komponente B in einer Dicke b, wobei es sich bei
Komponente A) um eine hinterspritzte thermoplastische Folie oder um eine Schicht eines spritzgegossenen Thermoplasten oder um eine direkt oder aus Lösung hergestellte Beschichtung handelt, wobei die Dicke der Folie bzw. die Dicke der einen Schicht aus Komponente A die Dicke a beträgt, und es sich bei
Komponente B) um eine Schicht eines spritzgegossenen Thermoplasten handelt, wobei die Dicke der einen Schicht aus Komponente B die Dicke b beträgt, und wobei die Komponenten A und B das folgende Kriterium erfüllen:
1. die Komponente A erfüllt in der Dicke a mindestens V2 und in der Dicke a+b nur HB, die Komponente B hat in der Dicke b V2 und in der Dicke a+b V0 oder V1 und es gilt für das Verhältnis a/b ≤ 2.5, bevorzugt ≤ 1.8 und besonders bevorzugt ≤ 1.2

In diesen Fällen erfüllt das Gesamtsystem überraschenderweise die Brandschutzklassifizierung V0 oder V1.

Gegenstand der Erfindung ist auch ein Verfahren zur Herstellung solcher Verbundsysteme, bestehend aus den folgenden Schritten:
a) Auswahl der für Komponente A und B geeigneten Materialien, wobei die ausgewählte Kombination der Komponenten das Kriterium 1 erfüllt,
b) Herstellen eines ganz oder teilweise spritzgegossenen Verbundsystems durch Zweikomponenten-Spritzgussverfahren, durch Hinterspritzen einer aus Komponente A bestehenden Folie mit Komponente B, oder durch Beschichten eines aus Komponente B bestehenden Spritzgießteils mit einer Beschichtung enthaltend Komponente A.

Bei der Komponente A handelt es sich entweder um ein spritzgegossenes thermoplastisches Material oder um eine Folie, oder um eine direkt oder aus Lösung hergestellte Beschichtung. Entscheidend ist, dass Komponente A keine oder nur eine geringe Menge an Flammschutzadditiven enthält, so dass Komponente A sowohl in der Dicke a+b als auch in der Dicke a die eigentlich geforderten Flammschutzeigenschaften, bestimmt nach der UL-Klassifizierung, nicht erfüllt. Komponente A kann transparent oder nicht transparent sein.

Als thermoplastisches Material und auch als Ausgangsmaterial für die Herstellung der Folie eignen sich generell alle thermoplastischen und thermoplastisch-elastischen Kunststoffe. Insbesondere eignet sich unverstärkter, verstärkter und/oder gefüllter Kunststoff auf Basis von Polyamid (PA), Polyester, insbesondere Polyethylenterephthalat (PET), Polybutylenterephthalat (PBT), Polyacrylate, insbesondere Polymethylmethacrylat (PMMA), Polybutylenterephthalat (PBT), Polystyrol (PS), syndiotaktisches Polystyrol, Acrylnitril-Butadien-Styrol (ABS), Polyolefine, insbesondere Polypropylen (PP), Polyethylen (PE), Polycarbonat (PC), Copolycarbonat (CoPC), Copolyestercarbonat, TPU, Styrol-Ethylen-Butadien-Polymere (SEBS) oder eine Mischung dieser Kunststoffe.

In einer Ausführungsform handelt es sich bei dem Ausgangsmaterial für die Komponente A um transparente polymere Materialien, die bevorzugt aus der Gruppe bestehend aus den Polymeren Polyethylen (PE), Polypropylen (PP), Polyethylenterephthalat (PET), Cyanoacrylat (CA), Cellulosetriacetat (CTA), Ethylvinylacetat (EVA), Propylvinylacetat (PVA), Polyvinylbutyral (PVB), Polyvinylchlorid (PVC), Polyester, Polycarbonat (PC), Copolycarbonat (CoPC), Copolyestercarbonat, Polyethylennaphtalat (PEN), Polyurethan (PU), thermoplastisches Polyurethan (TPU), Polyamid (PA), Polymethylmethacrylat (PMMA), Cellulosenitrat und Copolymeren aus mindestens zwei der Monomere der vorgenannten Polymere sowie Mischungen aus zwei oder mehreren dieser Polymeren ausgewählt sind.

Handelt es sich bei Komponente A um eine vorgefertigte Folie, so kann diese mittels konventioneller Verfahren durch Extrusion, aus Lösung oder durch Spritzguss hergestellt werden. Die Folie wird dann in das Formwerkzeug eingelegt und mit dem Material der Komponente B hinterspritzt.

Als Beschichtungen kommen alle aus dem Stand der Technik bekannten Polymere in Betracht, die sich für Beschichtungsverfahren eignen. Hier sind z.B. polymere Ester, Carbonate, Acrylate, Ether, Urethane oder Amide zu nennen, die im Anschluss an ihre Auftragung und Abdampfen des Lösungsmittels meist noch gehärtet werden, beispielsweise durch thermische oder aktinische Nachbehandlung. Zur Beschichtung eignen sich alle konventionellen Beschichtungsverfahren, z.B. Sprühen, Fluten, Tauchen, Walzen oder Rakeln.

Als Material für die Komponente B kommen alle über Spritzgießverfahren zu verarbeitenden, thermoplastischen Kunststoffe in Frage. Insbesondere eignen sich wieder unverstärkter, verstärkter und/oder gefüllter Kunststoff auf Basis von Polyamid (PA), Polyester, insbesondere Polyethylenterephthalat (PET), Polybutylenterephthalat (PBT), Polyacrylate, insbesondere Polymethylmethacrylat (PMMA), Polybutylenterephthalat (PBT), Polystyrol (PS), syndiotaktisches Polystyrol, Acrylnitril-Butadien-Styrol (ABS), Polyolefin, insbesondere Polypropylen (PP), Polyethylen (PE), Polycarbonat (PC), Copolycarbonat (CoPC), Copolyestercarbonat, TPU oder eine Mischung dieser Kunststoffe.

In Schritt a) des erfindungsgemäßen Verfahrens werden die Komponenten A und B so ausgewählt, dass sie das Kriterium 1 erfüllen. Weiterhin muss die Haftung von Komponente A auf Komponente B gewährleistet sein.

In Schritt b) des erfindungsgemäßen Verfahrens wird das Bauteil hergestellt, und zwar insbesondere durch ein Mehrkomponenten-Spritzgießverfahren oder durch Folienhinterspritzen, welche beide prinzipiell aus dem Stand der Technik hinlänglich bekannt sind.

Für Haftungseigenschaften von Kunststoffen und die entsprechenden Herstellungsverfahren sei beispielsweise auf die ausführliche Beschreibung im Handbuch Spritzgießen (ISBN 3-446-15632-1 - Carl Hanser- Verlag 2001), Kapitel "6.5 Verbinden mehrerer Komponenten beim Spritzgießen", Mehrkomponenten- Spritzgießverfahren S. 488, 489, 505, 508, 510, 514, 527 / Haftung von Komponente A auf B S. 517 / Folienhinterspritzen S. 566, 573, hingewiesen.

Unerwarteterweise wurde nun gefunden, dass die Komponente B in der Dicke a+b die eigentlich geforderte Flammschutzeigenschaft, bestimmt nach der UL-Klassifizierung, zwar besitzen muss, die Brandschutzklassifizerung jedoch in der Dicke b nicht zu erfüllen braucht. Entscheidend ist, dass die Kombination der Schichten aus Komponente A und Komponente B das oben genannte Kriterium 1 erfüllt.

Die Erfindung bezieht sich insbesondere auf Verbund-Bauteile, die sich aufgrund ihrer komplexen Geometrie und/oder Funktionsintegration, z.B. der Integration von Schraubdomen, nicht oder nur mit erheblichem Aufwand über Extrusions- bzw. Coextrusionsverfahren herstellen lassen.

Die Materialien der Komponenten A und B können neben den Flammschutzadditiven weitere Additive enthalten. Prinzipiell unterliegt die Auswahl der Additive keinen Beschränkungen. Mögliche Additive werden z.B. in WO-A 99/55772 S. 15 - 25, EP-A 1 308 084 und in den entsprechenden Kapiteln des "Plastics Additives Handbook" , ed. Hans Zweifel, 5th Edition 2000, Hanser Publishers, Munich beschrieben.

Beispielsweise können folgende Additive enthalten sein: Farbmittel, d.h. anorganische und organische Farbstoffe und Pigmente, Entformungmittel, Gleitmittel, Fließmittel, UV-Schutzmittel, IR-Absorber, Flammschutzmittel, optische Aufheller, anorganische und organische Streupartikel, Antistatika, Thermostabilisatoren, Nukleierungsmittel, Füllstoffe, Glaskugeln, Glas- und Kohlenstofffasern, Schlagzähmodifikatoren und Carbonanotubes. Die Farbstoffe und Pigmente können organisch oder anorganisch sein, beispielsweise Titandioxid, Bariumsulfat und Zinkoxid. Eingesetzt werden auch Ruß und Metallflitter. Beispiel für polymere Streupartikel sind Polyacrylate und PMMA, beispielsweise Kern-Schale-Acrylate, Polytetrafluoroethylene, Polyalkyltrialkoxysiloxane und Mischungen aus diesen Komponenten. UV-Absorber gehören beispielsweise zu den Klassen Benzotriazole, Oxalanilide, 2-Cyanacrylate, Benzilidinmalonate und Formamidine sowie Benzophenone, insbesondere Dibenzolyresorcine, und Triazine, insbesondere 2-(2-Hydroxyphenyl)-1,3,5-triazine.

Komponente B und optional Komponente A enthalten Flammschutzmittel, deren Auswahl die Art des eingesetzten thermoplastischen Materials und der zu erzielende Brandschutz vorgibt.

Als Beispiele für Flammschutzmittel sind Phosphorverbindungen zu nennen, beispielsweise solche der allgemeinen Formel (1), 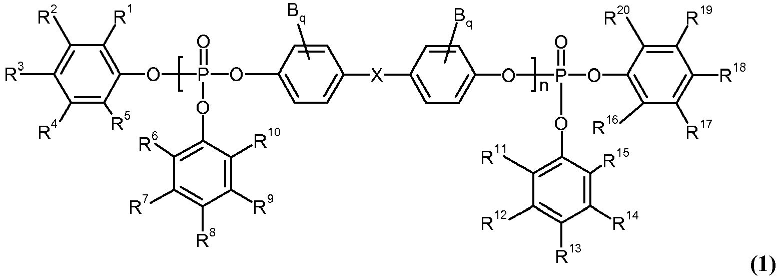 worin
R¹ bis R²⁰ unabhängig voneinander Wasserstoff, eine lineare oder verzweigte Alkylgruppe bis zu 6 C-Atomen
- n: einen Durchschnittswert von 0,5 bis 50 und

- B: jeweils C₁-C₁₂-Alkyl, vorzugsweise Methyl, oder Halogen, vorzugsweise Chlor oder Brom
- q: jeweils unabhängig voneinander 0, 1 oder 2,
- X: eine Einfachbindung, C=O, S, O, SO₂, C(CH₃)₂, C₁-C₅-Alkylen, C₂-C₅-Alkyliden, C₅-C₆-Cycloalkyliden, C₆-C₁₂-Arylen, an das weitere aromatische gegebenenfalls Heteroatome enthaltende Ringe kondensiert sein können, oder einen Rest der Formel (2) oder (3) 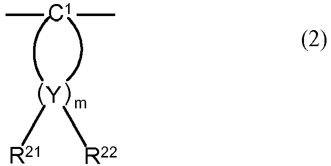 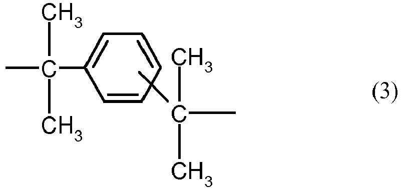
mit Y Kohlenstoff und
- R²¹ und R²²: für jedes Y individuell wählbar, unabhängig voneinander Wasserstoff oder C₁-C₆-Alkyl, vorzugsweise Wasserstoff, Methyl oder Ethyl,
- m: eine ganze Zahl von 4 bis 7, bevorzugt 4 oder 5, mit der Maßgabe, dass an mindestens einem Atom Y R²¹ und R²² gleichzeitig Alkyl sind,
bedeuten.

Insbesondere bevorzugt sind solche Phosphorverbindungen der Formel (1) bevorzugt, in denen R¹ bis R²⁰ unabhängig voneinander Wasserstoff oder einen Methylrest bedeuten und bei denen q = 0 ist. Insbesondere bevorzugt sind Verbindungen, in denen X = SO₂, O, S, C=O, C₂-C₅-Alkyliden, C₅-C₆-Cycloalkyliden oder C₆-C₁₂-Arylen bedeutet. Verbindungen mit X = C(CH₃)₂ sind ganz besonders bevorzugt.

Der Oligomerisierungsgrad n ergibt sich als Durchschnittswert aus dem Herstellverfahren der aufgeführten phosphorhaltigen Verbindungen. Der Oligomerisierungsgrad liegt hierbei in der Regel bei n <10. Bevorzugt sind Verbindungen mit n von 0,5 bis 5, besonders bevorzugt 0,7 bis 2,5. Ganz besonders bevorzugt sind Verbindungen, die einen hohen Anteil an Molekülen mit n = 1 zwischen 60 % und 100 %, bevorzugt zwischen 70 und 100 %, besonders bevorzugt zwischen 79 % und 100 % aufweisen. Herstellbedingt können die obigen Verbindungen auch geringe Mengen an Triphenylphosphat enthalten. Die genannten Phosphorverbindungen sind bekannt (vgl. z.B. EP-A 363 608, EP-A 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Weiterhin können als Flammschutzmittel eingesetzt werden unter anderem Alkali- bzw. Erdalkalisalze von aliphatischen bzw. aromatischen Sulfonsäure-, Sulfonamid- und Sulfonimidderivaten, z.B. Natrium- oder Kaliumperfluorbutansulfat, Natrium- oder Kaliumperfluoroctansulfat, Natrium- oder Kalium-diphenylsulfon-sulfonat und Natrium- oder Kalium-2,4,6-trichlorbenzoat und N-(p-tolylsulfonyl-)-p-toluolsulfimid-Kaliumsalz und N-(N'-Benzylaminocabonyl)-sulfanylimid-Kaliumsalz. Kaliumperfluorbutansulfonat ist u.a. als Bayowet^{®}C4 (Firma Lanxess, Leverkusen, Deutschland), RM64 (Firma Miteni, Italien) oder als 3M™ Perfluorobutanesulfonyl Fluoride FC-51 (Firma 3M, USA) kommerziell erhältlich.

Halogenhaltige Flammschutzmittel sind z.B. bromierte Verbindungen wie bromierte Oligocarbonate sind z.B. Tetrabrombisphenol-A oligocarbonat BC-52^{®}, BC-58^{®}, BC-52HP^{®} der Firma Chemtura. Desweiteren sind Polypentabrombenzylacrylate (z.B. FR 1025 der Firma Dead Sea Bromine (DSB)), oligomere Umsetzungsprodukte aus Tetrabrom-bisphenol-A mit Expoxiden (z.B. FR 2300 und 2400 der Firma DSB), oder bromierte Oligo- bzw. Polystyrole (z.B. Pyro-Chek^{®} 68PB der Firma Ferro Corporation, PDBS 80 und Firemaster^{®} PBS-64HW der Firma Chemtura) zu nennen.

Die Einarbeitung der Zuschlagsstoffe in die Thermoplasten erfolgt mit gängigen Einarbeitungsverfahren und kann beispielsweise durch Vermischen von Lösungen des Zuschlagstoffe und Lösung von Polycarbonat in geeigneten Lösungsmitteln wie Dichlormethan, Halogenalkanen, Halogenaromaten, Chlorbenzol und Xylolen erfolgen. Die Substanzgemische werden dann bevorzugt in bekannter Weise durch Extrusion homogenisiert. Die Lösungsgemische werden bevorzugt in bekannter Weise durch Ausdampfen des Lösungsmittels und anschließende Extrusion aufgearbeitet.

Zudem kann die Zusammensetzung in üblichen Mischvorrichtungen wie Schneckenextrudern (zum Beispiel Zweischneckenextruder, ZSK), Kneter, Brabender- oder Banbury-Mühlen gemischt und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die Additive, insbesondere Flammschutzadditive und/oder UV-Absorber, können auch über Konzentrate (Masterbatche) den Ausgangsmaterialien zugegeben werden. Dabei werden durch eines der oben beschriebenen Einarbeitungsverfahren das oder die Additive in möglichst hoher Konzentration in ein thermoplastisches Trägermaterial eingearbeitet. Das Additiv-Konzentrat wird dann dem Thermoplasten vor der Verarbeitung zugemischt, so dass sich die gewünschte Endkonzentration des Additivs ergibt.

In einer weiteren Variante können auch viele Thermoplaste als halogenhaltig oder halogenfrei flammgeschützte Varianten kommerziell bezogen werden.

In verschiedenen Ausführungsformen handelt es sich bei der flammgeschützten Komponente B beispielsweise um kommerziell erhältliche Polycarbonate und Polycarbonat/ABS Blends, bei der Komponente A um schwach bzw. nicht flammgeschützte Polycarbonate in Spritzgießqualität bzw. um Polycarbonat- oder TPU-Folien.

In einer besonderen Ausführungsform enthält die Komponente B ≥ 95 Gew.-% Polycarbonat und mindestens 0.05 Gew.-%, bevorzugt 0.1 Gew.-% Teflon sowie weitere Flammschutzadditive, und die Komponente A enthält ≥ 95 Gew.-% Polycarbonat, und die Komponente A erfüllt in der Dicke a mindestens V2 und in der Dicke a+b nur HB, die Komponente B hat in der Dicke b V2 und in der Dicke a+b V0 oder V1 und es gilt für das Verhältnis a/b ≤ 2.5, bevorzugt ≤ 1.8 und besonders bevorzugt ≤ 1.2.

Unter Dicke a, Dicke b und Gesamtdicke a+b sind diejenigen (Wand)Dicken im Bauteil zu verstehen, die relevant für eine UL-Listung der betreffenden Materialien sind. Als entscheidend für die Auswahl der Materialien für die Komponenten können jedoch alleinig die oben genannten Kriterien betrachtet werden.

Die Gesamtdicke a+b im Bauteil beträgt bevorzugt 1-10 mm, und ganz besonders bevorzugt 2-8

Durch das neue Verfahren zur Herstellung solcher Verbundsysteme, bestehend aus den folgenden Schritten a-b):
a) Auswahl der für Komponente A und B geeigneten Materialien, wobei die jeweilige ausgewählte Kombination das Kriterium 1 erfüllt:
   1.) die Komponente A erfüllt in der Dicke a mindestens V2 und in der Dicke a+b nur HB, die Komponente B hat in der Dicke b V2 und in der Dicke a+b V0 oder V1 und es gilt für das Verhältnis a/b ≤ 2.5, bevorzugt ≤ 1.8 und besonders bevorzugt ≤ 1.2;
b) Herstellen eines ganz oder teilweise spritzgegossenen Verbundsystems durch Zweikomponenten-Spritzgussverfahren, durch Hinterspritzen einer aus Komponente A bestehenden Folie mit Komponente B, oder durch Beschichten eines aus Komponente B bestehenden Spritzgießteils mit einer Beschichtung enthaltend Komponente A;
wird ein einfacher Prozess zur Verfügung gestellt, der es dem Anwender ermöglicht, für ganz oder teilweise spritzgegossene Mehrkomponentensysteme aus einer deutlich größeren Menge an Materialien als bisher auszuwählen. Gleichzeitig ist es jedoch nicht nötig, in aufwändigen trial-anderror - Versuchen die optimale Materialkombination zu ermitteln, sondern die erfindungsgemäßen Kriterien ermöglichen die Auswahl der Materialien mit Hilfe von UL-Kenngrößen der Einzelkomponenten.

### Beispiele:

### 1. Verwendete Materialien

Bei den eingesetzten thermoplastischen Materialien handelt es sich um Polycarbonate des Typs Makrolon®, um Polycarbonat/ABS Blends des Typs Bayblend® und um Polycarbonat-Folien des Typs Makrofol®, der Firma Bayer MaterialScience AG, Deutschland. Folgende Typen mit den aufgeführten Charakteristika wurden eingesetzt:
**M1:** Makrolon® 6555: Polycarbonat, MVR (300 °C/1.2 kg) 9.5 cm³/10 min; Chlor- und bromfreie Flammschutzausrüstung; UL 94V-0/3.0 mm; mittelviskos; leicht entformbar
**M2:** Makrolon® 6557: Polycarbonat; MVR (300 °C/1.2 kg) 9.5 cm³/10 min; Chlor- und bromfreie Flammschutzausrüstung; UL 94V-0/3.0 mm; mittelviskos; UV-stabilisiert; leicht entformbar
**M3:** Makrolon® DP1-1884: Polycarbonat, MVR (300 °C/1.2 kg) 17 cm³/10 min; Chlor- und bromfreie Flammschutzausrüstung; niedrigviskos; leicht entformbar
**M4:** Makrolon® 1952: Polycarbonat, MVR (300 °C/1.2 kg) 9.5 cm³/10 min; Chlor- und bromfreie Flammschutzausrüstung; UL 94V-0/2.3 mm; mittelviskos; leicht entformbar
**M5:** Makrolon® 7101: Polycarbonat, MVR (300 °C/1.2 kg) 33 cm³/10 min; spezielles Flammschutzsystem; Chlor- und bromfreie Flammschutzausrüstung, UL 94V-0/1.5 mm; niedrigviskos; leicht entformbar; Vicat-Erweichungstemperatur 50 N; 50 °C/h =110 °C;
**M6:** Makrolon® 2205: Polycarbonat, MVR (300 °C/1.2 kg) 35 cm³/10 min; universell einsetzbar; niedrigviskos; leicht entformbar
**M7:** Bayblend FR3005HF: Polycarbonat/ABS Blend, Spritzgießtyp; sehr leicht fließend; Vicat/B 120 = 96 °C; UL-Listung 94 V-0 bei 1,5 mm; antimon-, chlor- und bromfreie Flammschutzausrüstung.
**M8:** Bayblend FR3020: Polycarbonat/ABS Blend, 5 % mineralgefüllt; Dünnwandtyp; Spritzgießen; Vicat/B 120 = 103 °C; HDT/A >= 85 °C; sehr gute UL-Listung in dünnen Wandstärken (V-0 bei 0,75 mm), antimon-, chlor- und bromfreie Flammschutzausrüstung.
**M9:** Bayblend FR3021: Polycarbonat/ABS Blend, 15 % mineralgefüllt; Spritzgießtyp; erhöhte Steifigkeit; E-Modul = 4800 MPa; Vicat/B 120 = 98 °C; UL-Listung 94 V-0 bei 1,5 mm; antimon-, chlor- und bromfreie Flammschutzausrüstung; Glühdrahtprüfung (GWFI): 960 °C bei 2,0 mm
**M10:** Bayblend T65XF: Polycarbonat/ABS Blend, Standardtyp; Spritzgießen; Vicat/B 120 = 120 °C; verbessertes Fließverhalten gegenüber T65.
**M11** Makrofol TP1243, nicht flammgeschützte Streulichtfolie aus Polycarbonat in der Dicke 500µm
**M12:** Makrofol FR 7-2, flammgeschützte Streulichtfolie aus Polycarbonat in der Dicke 500µm, UL 94V-0/500 µm

### 2. Herstellung der spritzgegossenen Prüfkörper

Prüfkörper wurden im 2K-Spritzgussverfahren auf einer Spritzgießmaschine Arburg Allrounder 370S 800-150 mit einer Schließkraft von max. 800 kN und Schneckendurchmesser 25 mm hergestellt. Es wurde ein Stammwerkzeug mit wechselbaren Steckeinsätzen zur Herstellung von Campus-Probekörpern mit variabler Dicke (Steckeinsätze [ASTM Stab 127x12,7xd, in mm] der Dicke 0,8 mm - 1,5 mm - 2,0 mm - 3,0 mm - 3,8 mm) verwendet.

Vor dem Einsatz wurden die Materialien jeweils mit den in Tab. 1 aufgeführten Parametern getrocknet. Für die Spritzgießverarbeitung der Materialien wurden die in Tab. 1 aufgeführten Massetemperaturen eingestellt. Im ersten Schritt des 2K-Spritzgusses wurden Prüfkörper (Brandstab 125 x 13 x a) in verschiedenen Dicken a (z.B. 0,8 mm / 1,5 mm / 2,0 mm / 3,0 mm) aus der Materialkomponente A hergestellt. Diese Brandstäbe wurden im zweiten Schritt in ein Werkzeug mit größerer Wanddicke b (3,0mm / 3,8mm) eingelegt und mit der Materialkomponente B hinterspritzt.

**Tabelle 1.**

| **Material** | **Trocknung** | **Massetemperatur [°C]** | **Formtemperatur [°C]** |
|---|---|---|---|
| M1 und M2 | 4 Std./120° C | 300 | 80 |
| M3 | 4 Std./120° C | 280 | 80 |
| M4 | 4 Std./120° C | 300 | 80 |
| M5 | 4 Std./100° C | 280 | 80 |
| M6 | 4 Std./120° C | 280 | 80 |
| M7 | 4 Std./80° C | 240 | 80 |
| M8 | 4 Std./90° C | 240 | 80 |
| M9 | 4 Std./90° C | 240 | 80 |
| M10 | 4 Std./110° C | 260 | 80 |

Zur Herstellung der Beispiele 1 - 26 wurden jeweils die in den Tab. 2 und 3. aufgelisteten Materialkomponenenten A und B zu 2K-Prüfstäben mit den jeweiligen Dicken a und b, bzw. mit der resultierenden Gesamtdicke a+b, verarbeitet. Die Prüfergebnisse der Brandversuche sind ebenfalls in Tab. 2 aufgelistet.

Bei der Folienhinterspritzung mit den Komponenten A = M11 und M12 (Tab. 4) wurden die 500 µm Folien in die Brandstabwerkzeuge (3,2mm / 3,8mm) eingelegt, mit der Komponente B hinterspritzt und ebenfalls im Brandversuch nach UL94-V Norm geprüft.

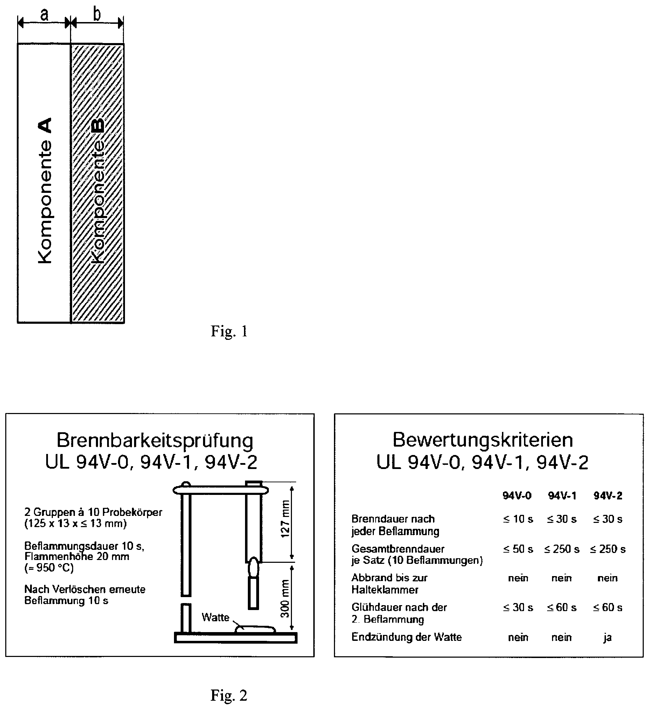

Fig. 1 gibt schematisch den Aufbau des 2K-Spritzguss-Prüfkörpers wieder:

### 3.) Ausprüfung:

Die Ausprüfung der Prüfstäbe erfolgte nach normgerechter Lagerung in einem Brandversuch nach UL94-V Norm (vgl. Fig. 2)

Alle Ergebnisse sind in den folgenden Tabellen 2 - 4 zusammengestellt.

**Tab.2**

| Ex. | **Komponente A** | | | | **Komponente B** | | | | | **Ausprüfung** | |
|---|---|---|---|---|---|---|---|---|---|---|---|
| Nr. | **Material** | **Dicke a [mm]** | **UL94 Listung bei der Dicke a** | **UL94 Listung bei der Dicke (a+b)** | **Material** | **Dicke b [mm]** | **UL94 Listung bei der Dicke b** | **UL94 Listung bei der Dicke (a+b)** | **Verhältni sa/b** | **UL94 V0/V1 bei 3,0 mm** | **UL94 V2 bei 3,0 mm** |
| 1 | M4 | 1,5 | V2 | V0 | M4 | 1,5 | V2 | V0 | 1,00 | x | |
| 2 | M4 | 1,5 | V2 | V0 | M2 | 1,5 | V2 | V0 | 1,00 | x | |
| 3 | M2 | 1,5 | V2 | V0 | M2 | 1,5 | V2 | V0 | 1,00 | x | |
| 4 | M4 | 1,5 | V2 | V0 | M8 | 1,5 | V0 | V0 | 1,00 | x | |
| 5 | M5 | 1,5 | V0 | V0 | M8 | 1,5 | V0 | V0 | 1,00 | x | |
| 6 | M2 | 1,5 | V2 | V0 | M8 | 1,5 | V0 | V0 | 1,00 | x | |
| 7 | M4 | 1,5 | V2 | V0 | M7 | 1,5 | V0 | V0 | 1,00 | x | |
| 8 | M5 | 1,5 | V0 | V0 | M7 | 1,5 | V0 | V0 | 1,00 | x | |
| 9 | M2 | 1,5 | V2 | V0 | M7 | 1,5 | V0 | V0 | 1,00 | x | |
| 10 | M4 | 1,5 | V2 | V0 | M9 | 1,5 | V0 | V0 | 1,00 | x | |
| 11 | M5 | 1,5 | V0 | V0 | M9 | 1,5 | V0 | V0 | 1,00 | x | |
| 12 | M2 | 1,5 | V2 | V0 | M9 | 1,5 | V0 | V0 | 1,00 | x | |
| 13 | M5 | 1,5 | V0 | V0 | M5 | 1,5 | V0 | V0 | 1,00 | x | |

**Tab. 3**

| | **Komponente A** | | | | **Komponente B** | | | | | **Ausprüfung** | | |
|---|---|---|---|---|---|---|---|---|---|---|---|---|
| Bsp. Nr. | **Material** | **Dicke a [mm]** | **UL94 Listung bei der Dicke a** | **UL94 Listung bei der Dicke (a+b)** | **Material** | **Dicke b [mm]** | **UL94 Listung bei der Dicke b** | **UL94 Listung bei der Dicke (a+b)** | **Verhält nis a: b** | **UL94 V0 oder V1 bei 3,8 mm** | **UL94 V2 bei 3,8 mm** | **UL94 V n. b. bei** 3,8 **mm (nicht bestanden)** |
| 14 | M6 | 0,8 | V2 | HB | M3 | 3,0 | V0 | V0 | **0,27** | **X** | | |
| 15 | M6 | 1,5 | V2 | HB | M3 | 2,3 | V1 | V0 | **0,65** | **X** | | |
| 16 | M6 | 2,0 | V2 | HB | M3 | 1,8 | V2 | V0 | **1,11** | **X** | | |
| 17 | M6 | 3,0 | HB | HB | M3 | 0,8 | V2 | V0 | **3,75** | | **X** | |
| 18 | M1 | 0,8 | V2 | V0 | M3 | 3,0 | V0 | V0 | **0,27** | **X** | | |
| 19 | M1 | 1,5 | V2 | V0 | M3 | 2,3 | V1 | V0 | **0,65** | **X** | | |
| 20 | M1 | 2,0 | V2 | V0 | M3 | 1,8 | V2 | V0 | **1,11** | **X** | | |
| 21 | M10 | 1,5 | HB | HB | M3 | 2,3 | V1 | V0 | **0,65** | | | **X** |
| 22 | M10 | 2,0 | HB | HB | M3 | 1,8 | V2 | V0 | **1,11** | | | **X** |

**Tab. 4**

| | **Komponente A** | | | | **Komponente B** | | | | | **Ausprüfung** |
|---|---|---|---|---|---|---|---|---|---|---|
| Bsp. Nr. | **Materia l** | **Dicke a [mm]** | **UL94 Listung bei der Dicke a** | **UL94 Listung bei der Dicke (a+b)** | **Material** | **Dicke b [mm]** | **UL94 Listung bei der Dicke b** | **UL94 Listung bei der Dicke (a+b)** | **Verhältnis a : b** | **UL94 V0 oder V1 bei der Dicke (a+b)** |
| 23 | M11 | 0,5 | HB | HB | M1 | 3,3 | V0 | V0 | **0,15** | **X** |
| 24 | M12 | 0,5 | V0 | V0 | M1 | 3,3 | V0 | V0 | **0,15** | **X** |
| 25 | M11 | 0,5 | HB | HB | M1 | 2,7 | V2 | V0 | **0,19** | **X** |
| 26 | M12 | 0,5 | V0 | V0 | M1 | 2,7 | V2 | V0 | **0,19** | **X** |

Unerwarteter Weise erfüllten verschiedenste FR-Kombinationen der hergestellten und geprüften 2K-Brandstäbe die Brandklasse UL94 V-0, mindestens aber die Klasse UL94 V1. Selbst bei den FR-Materialien, bei denen die einzelnen Schichten diese Brandklassen nicht erreichen würden, wurde eine Verbesserung der Brandklassifizierung gefunden.

Erst recht überraschten die Kombinationen zwischen FR- und non FR- Stäben (Folie). Hier wurden sogar Ergebnisse von UL94 V0/V1 gefunden, wobei teilweise bis zu mehr als die Hälfte der Gesamtdicke von 3,8 mm aus non-FR Material bestand und/oder die Einzelkomponenten in der Dicke a bzw. b beide nur ein V2 erreichten.

Bei den erfindungsgemäßen Beispielen 14 -16 (Tab. 3) erfüllt die Komponente A in der Dicke a mindestens V2 und in der Dicke a+b nur HB, die Komponente B hat in der Dicke b V2 und in der Dicke a+b V0 oder V1, der Prüfstab aus beiden Komponenten erfüllt jedoch überraschenderweise die Listung V0. Das Verhältnis a/b ist ≤ 2.5.

Bei den Beispielen 23 und 25 (Tab. 4) erfüllt A in der Dicke a und in der Dicke a+b nur die UL94 Listung HB. Das Verhältnis von a/b ist ≤ 0.3. Die Komponente B besitzt in der Dicke a+b die UL94 Listung V0 oder V1, der Prüfstab aus beiden Komponenten erfüllt überraschenderweise die Listung V0.

Bei den Beispielen 1-4, 6-7, 9-10 und 12 (Tab. 2) sowie 18 - 20 (Tab. 3) und 26 (Tab. 4), erfüllt mindestens eine der Komponenten A oder B in der Dicke a bzw. b nur V2 und beide Komponenten erfüllen in der Dicke a+b V0 oder V1. Der Prüfstab aus beiden Komponenten erfüllt überraschenderweise die Listung V0.

## Patentansprüche

1. Ein ganz oder teilweise spritzgegossenes Mehrkomponenten-Verbundsystem mit der Wanddicke a+b enthaltend eine Komponente A in einer Dicke a und eine Komponente B in einer Dicke b, wobei es sich bei
Komponente A) um eine hinterspritzte thermoplastische Folie oder um eine Schicht eines spritzgegossenen Thermoplasten oder um eine direkt oder aus Lösung hergestellte Beschichtung handelt, wobei die Dicke der Folie bzw. die Dicke der einen Schicht aus Komponente A die Dicke a beträgt, und es sich bei Komponente B) um eine Schicht eines spritzgegossenen Thermoplasten handelt,
wobei die Dicke der einen Schicht aus Komponente B die Dicke b beträgt,
wobei die Komponenten A und B jeweils aus einem Material und einer Schicht bestehen,
und wobei die Komponenten A und B das folgende Kriterium erfüllen, wobei sich die Angaben auf die Brandklassen der UL94-V Norm beziehen:
die Komponente A erfüllt in der Dicke a mindestens V2 und in der Dicke a+b nur HB, die Komponente B hat in der Dicke b V2 und in der Dicke a+b V0 oder V1 und es gilt für das Verhältnis a/b ≤ 2.5.

2. Mehrkomponenten-Verbundsystem gemäß Anspruch 1, wobei Komponente A und Komponente B aus spritzgegossenen Thermoplasten bestehen.

3. Mehrkomponenten-Verbundsystem gemäß Anspruch 1, wobei es sich bei dem Verbundsystem um eine hinterspritzte Folie handelt, und die Folie Komponente A darstellt.

4. Mehrkomponenten-Verbundsystem gemäß einem der Ansprüche 1-3, wobei mindestens eine der Komponenten A und B Polycarbonat, Copolycarbonat oder Copolyestercarbonat enthält.

5. Mehrkomponenten-Verbundsystem gemäß einem der Ansprüche 1-4, wobei mindestens Komponente B mindestens ein Flammschutzadditiv enthält.

6. Verfahren zur Herstellung eines ganz oder teilweise spritzgegossenen Mehrkomponenten-Verbundsystems nach einem der vorhergehenden Ansprüche, enthaltend die Schritte:
a. Auswahl der für Komponente A und B geeigneten Materialien, so dass diese das folgende Kriterium erfüllen, wobei sich die Angaben auf die Brandklassen der UL94-V Norm beziehen:
die Komponente A erfüllt in der Dicke a mindestens V2 und in der Dicke a+b nur HB, die Komponente B hat in der Dicke b V2 und in der Dicke a+b V0 oder V1 und es gilt für das Verhältnis a/b ≤ 2.5;
b. Herstellen eines ganz oder teilweise spritzgegossenen Verbundsystems durch Zweikomponenten-Spritzgussverfahren, durch Hinterspritzen einer aus Komponente A bestehenden Folie mit Komponente B, oder durch Beschichten eines aus Komponente B bestehenden Spritzgießteils mit einer Beschichtung enthaltend Komponente A.

7. Verfahren gemäß Anspruch 6, **dadurch gekennzeichnet, dass** es sich bei dem Herstellverfahren in Schritt b) um ein Zweikomponenten-Spritzgussverfahren handelt.

8. Verfahren gemäß Anspruch 6, **dadurch gekennzeichnet, dass** es sich bei dem Herstellverfahren in Schritt b) um das Hinterspritzen einer aus Komponente A bestehenden Folie mit Komponente B handelt.

## Claims

1. An entirely or partially injection-moulded multi-component composite system having wall thickness a+b, containing a component A in a thickness a and a component B in a thickness b, wherein
component A) is a back-moulded thermoplastic film or a layer of an injection-moulded thermoplastic or a coating produced directly or from solution, the thickness of the film or the thickness of one layer made from component A being the thickness a, and
component B) is a layer of an injection-moulded thermoplastic, the thickness of one layer made from component B being the thickness b,
wherein components A and B each consist of a material and a layer,
and wherein components A and B satisfy the following criterion, wherein the references to the fire classes relate to Standard UL94-V:
component A achieves at least V2 in thickness a and only HB in thickness a+b, component B has V2 in thickness b and V0 or V1 in thickness a+b, and the ratio a:b is ≤ 2.5.

2. Multi-component composite system according to claim 1, wherein component A and component B consist of injection-moulded thermoplastics.

3. Multi-component composite system according to claim 1, wherein the composite system is a back-moulded film and the film constitutes component A.

4. Multi-component composite system according to one of claims 1-3, wherein at least one of components A and B contains polycarbonate, copolycarbonate or copolyester carbonate.

5. Multi-component composite system according to one of claims 1-4, wherein at least component B contains at least one flame retardant.

6. Process for producing an entirely or partially injection-moulded multi-component composite system according to one of the preceding claims, comprising the following steps:
a. selection of suitable materials for components A and B such that they satisfy the following criterion, wherein the references to the fire classes relate to Standard UL94-V:
component A achieves at least V2 in thickness a and only HB in thickness a+b,
component B has V2 in thickness b and V0 or V1 in thickness a+b, and the ratio a:b is ≤ 2.5;
b. production of an entirely or partially injection-moulded composite system by two-component injection moulding processes, by back-moulding a film consisting of component A with component B, or by coating an injection-moulded part consisting of component B with a coating containing component A.

7. Process according to claim 6, **characterised in that** the production process in step b) is a two-component injection moulding process.

8. Process according to claim 6, **characterised in that** the production process in step b) is the back-moulding of a film consisting of component A with component B.

## Revendications

1. Système composite à plusieurs composants totalement ou partiellement moulé par injection présentant une épaisseur de paroi a + b contenant un composant A en une épaisseur a et un composant B en une épaisseur b, le composant A) étant une feuille thermoplastique contre-injectée ou une couche d'un thermoplastique moulé par injection ou d'un revêtement préparé directement ou à partir d'une solution, l'épaisseur de la feuille ou l'épaisseur de ladite une couche de composant A étant l'épaisseur a, et le composant B) étant une couche d'un thermoplastique moulé par injection, l'épaisseur de ladite une couche de composant B étant l'épaisseur b, les composants A et B étant à chaque fois constitués par un matériau et une couche, les composants A et B répondant au critère suivant, les indications relatives aux classes de feu se rapportant à la norme UL94-V : le composant A dans l'épaisseur a correspond au moins à V2 et dans l'épaisseur a + b uniquement à HB, le composant B dans l'épaisseur b correspond à V2 et dans l'épaisseur a + b à V0 ou V1 et le rapport a/b est ≤ 2,5.

2. Système composite à plusieurs composants selon la revendication 1, le composant A et le composant B étant constitués par des thermoplastiques moulés par injection.

3. Système composite à plusieurs composants selon la revendication 1, le système composite étant une feuille contre-injectée et la feuille représentant le composant A.

4. Système composite à plusieurs composants selon l'une quelconque des revendications 1-3, au moins un des composants A et B contenant du polycarbonate, du copolycarbonate ou du copolyester-carbonate.

5. Système composite à plusieurs composants selon l'une quelconque des revendications 1-4, au moins le composant B contenant au moins un additif ignifuge.

6. Procédé pour la fabrication d'un système composite à plusieurs composants totalement ou partiellement moulé par injection selon l'une quelconque des revendications précédentes, contenant les étapes :
a. sélection des matériaux appropriés pour les composants A et B, de manière telle que ceux-ci répondent au critère suivant, les indications se rapportant aux classes de feu de la norme UL94-V : le composant A dans l'épaisseur a correspond au moins à V2 et dans l'épaisseur a + b uniquement à HB, le composant B dans l'épaisseur b correspond à V2 et dans l'épaisseur a + b à V0 ou V1 et le rapport a/b est ≤ 2,5 ;
b. fabrication d'un système composite totalement ou partiellement moulé par injection par un procédé de moulage par injection à deux composants, par contre-injection d'une feuille constituée par le composant A avec le composant B ou par revêtement d'une pièce moulée par injection constituée par le composant B par un revêtement contenant le composant A.

7. Procédé selon la revendication 6, **caractérisé en ce qu'**il s'agit, pour le procédé de fabrication dans l'étape b), d'un procédé de moulage par injection à deux composants.

8. Procédé selon la revendication 6, **caractérisé en ce qu'**il s'agit, pour le procédé de fabrication dans l'étape b), de la contre-injection d'une feuille constituée par le composant A avec le composant B.
